# EUROPÄISCHE PATENTSCHRIFT

(11) **EP 1 732 393 B1**
(45) Veröffentlichungstag und Bekanntmachung des Hinweises auf die Patenterteilung: **23.01.2008**
(21) Anmeldenummer: 05716232.3
(22) Anmeldetag: 19.03.2005
(51) Int. Cl.: A22C 13/00

(54) **CELLULOSEHYDRAT-WURSTHÜLLE MIT MINIMALER BRATHAFTUNG**
CELLULOSE HYDRATE SAUSAGE CASING FEATURING MINIMUM MEAT CLING
BOYAU A SAUCISSE EN HYDRATE DE CELLULOSE PRESENTANT UNE ADHERENCE MINIMALE A LA FARCE

(30) Priorität: 25.03.2004 DE 102004015088
(43) Veröffentlichungstag der Anmeldung: 20.12.2006
(73) Patentinhaber: Kalle GmbH, 65203 Wiesbaden (DE)
(72) Erfinder: HAMMER, Klaus-Dieter, 55120 Mainz (DE); KÜNZEL, Udo, 65366 Geisenheim (DE); EFFERN, Volker, 65321 Heidenrod-Kemel (DE)
(74) Vertreter: Plate, Jürgen
(86) Internationale Anmeldenummer: PCT/EP2005/002949
(87) Internationale Veröffentlichungsnummer: WO 2005/092108

(56) Entgegenhaltungen:
- EP-A- 0 676 143
- EP-A- 1 042 958
- DE-A1- 3 447 026
- US-A- 3 582 364
- US-A- 5 358 784

## Beschreibung

Die Erfindung betrifft eine schlauchförmige Wursthülle auf Basis von Cellulosehydrat, die auf der Innenseite mit reaktiven Haft- und Trennkomponenten imprägniert ist, sowie ein Verfahren zur Herstellung der Wursthülle.

Wursthüllen auf Basis von Cellulosehydrat sind seit Jahrzehnten weit verbreitet. An Brühwurstbrät ist die Haftung so stark, daß sich die Hülle nur unter Aufreißen der Brätoberfläche abziehen läßt. Bei Dauerwurst ist die Haftung dagegen so gering, daß sich die Hülle während des Reifens der Wurst ablöst ("abstellt"), nicht mitschrumpft und Falten bildet. In dem Zwischenraum zwischen Hülle und Brätoberfläche bildet sich häufig unerwünschter Schimmel.

Um im Fall der Dauerwurst die Haftung der Hülle zu verbessern, wurden verschiedene Haftimprägnierungen vorgeschlagen, die auf die Innenseite der Hülle aufgebracht werden. Sie enthalten beispielsweise mit der Cellulose verknüpfte natürliche Eiweiße, Polyamid-Polyamin-Epichlorhydrin-Harze oder Chitosan, das mit Hilfe von Glyoxal kovalent mit der Cellulose verbunden ist.

Für Wursthüllen mit einer glatten inneren Oberfläche, wie sie bei doppelviskosierten Faserdärmen oder bei Cellophandärmen zu finden ist, haben sich reaktive Haftkomponenten, kombiniert mit einem Öl, als vorteilhaft erwiesen. Die Ölkomponente ist dabei insbesondere ein Triglycerid, Paraffinöl oder ein Silikonöl (DE 32 08 283). Darüber hinaus wurden für Dauerwurst Innenimprägnierungen entwickelt, die eine Kombination von reaktiven Trenn- und Haftkomponenten enthalten (DE 44 07 288). Mit einer solchen Innenimprägnierung läßt sich ein ausgewogenes Verhältnis von guter Schälbarkeit bei gleichzeitig genügender Haftung erzielen.

Daneben sind zahlreiche Trennpräparationen entwickelt worden. Diese enthalten insbesondere Chromfettsäure-Komplexe (US 2 9.01 358), Dialkylketene mit langkettigen Alkylresten (DE 14 92 699), perfluorierte Verbindungen (DE 22 59 671) oder Lecithin (EP 0 502 431 = US 5 358 784).

Durch die industrielle Verarbeitung werden immer höhere und spezifischere Anforderungen an die Qualität von Wursthüllen gestellt. Für die auf dem nordamerikanischen Markt in großen Mengen verlangte Pizzasalami werden Cellulose-Faserdärme benötigt, die eine exakte Kaliberhaltung aufweisen (d.h. es gibt praktische keine Schwankungen beim Durchmesser der Hülle) und eine ausreichend rauhe Oberfläche besitzen, damit sich lange Abschnitte (bis etwa 3,2 m) problemlos auf das Füllrohr aufschieben lassen. Nach einer Reifedauer von nur 10 bis 12 Tagen soll sich die Hülle sehr leicht abschälen lassen. Dazu darf die Haftung nur sehr gering sein. Sie muß jedoch ausreichen, damit die Hülle nicht abstellt, wodurch Raum entsteht in dem sich Schimmel entwickeln kann.

Besonders hohe Anforderungen werden an eine Hülle für schimmelgereifte kalifornische Salami gestellt. Diese Salami-Art wird über einen langen Zeitraum unter optimalen äußeren Bedingungen gereift. Werden diese Bedingungen nicht eingehalten, dann bildet der Schimmel Cellulasen, die das Hüllenmaterial abbauen. Die Hülle soll daher besonders leicht schälbar sein, damit auch eine von den cellulytischen Enzymen angegriffene Hülle noch einwandfrei abgezogen werden kann. Mit den bisher bekannten Innenimprägnierungen läßt sich diese Aufgabe nicht erfüllen.

In der EP-A 676 143 (= US 5 595 796) ist eine Cellulosehülle offenbart, die auf der Innenseite mit einem Gemisch aus einer Trenn- und einer Haftkomponente imprägniert ist. Die Haftkomponente ist dabei bevorzugt ein natürliches Eiweiß, Chitosan, ein Aminoplast-Vorkondensat oder ein Polyamin-Polyamid-Epichlorhydrin-Harz, während die Trennkomponente bevorzugt ein Chromfettsäure-Komplex oder ein Diketen mit langkettigen, fettähnlichen Substituenten ist. Auch diese Hülle kann den Anforderungen nicht gerecht werden, denn die haftungserhöhende Wirkung der Eiweißkomponente wird nicht ausreichend von der haftungsvermindernden Wirkung der Dialkylketene kompensiert und überdeckt. Die Innenseite der Hülle allein mit Chromfettsäure-Komplexen (US 2 901 358) oder allein mit Dialkylketenen (DE 14 92 699) führt selbst dann zu einem Ablösen der Hülle vom Brät, wenn diese nur in geringer Menge aufgetragen wurden. Dieser Lösungsweg scheidet damit ebenfalls aus.

Es bestand daher nach wie vor die Aufgabe, für Wursthüllen auf Cellulosebasis eine Innenimprägnierung zur Verfügung zu stellen, die eine ausreichende Haftung über die gesamte Reifedauer der Wurst gewährleistet, so daß die Hülle nirgends abstellt. Gleichzeitig sollen die Hüllen beim Abschälen nur noch minimal haften.

Gelöst wurde die Aufgabe mit einer Innenimprägnierung, die eine Haft- und mindestens zwei Trennkomponenten enthält, wobei neben der Haftkomponente nur eine der Trennkomponenten an die Cellulose der Hülle gebunden ist, die andere jedoch nicht. Das war insofern überraschend, als die Fachwelt bisher davon ausgegangen war, daß bereits ein geringer Zusatz einer Trennkomponente bei der Dauerwurstreifung zu einem Abstellen der Hülle führt.

Gegenstand der vorliegenden Erfindung ist demgemäß eine innenimprägnierte, schlauchförmige Wursthülle auf Basis von Cellulose, dadurch gekennzeichnet, daß die Imprägnierung mindestens eine Haft- und mindestens zwei Trennkomponenten umfaßt, wobei die Haftkomponente und eine der Treninkomponenten an die Cellulose der Hülle gebunden ist, während eine weitere Trennkomponente ungebunden ist.

Als Haftkomponente bevorzugt sind natürliche Eiweiße tierischen oder pflanzlichen Ursprungs, insbesondere Casein, Gelatine, Weizenprotein oder Sojaprotein, daneben auch Chitosan, Aminoplast-Vorkondensate oder Polyamin-Polyamid-Epichlorhydrin-Harze.

Die Bindung der Haftkomponente an die Cellulose der Hülle erfolgt zweckmäßig mit Hilfe von Vernetzern. Das sind Verbindungen mit 2 oder mehr reaktiven Gruppen, die die als Haftkomponente eingesetzten Verbindungen mit der Cellulose, gegebenenfalls auch untereinander; verbinden. Besonders geeignete Vernetzer, insbesondere für Proteine und Chitosan, sind Dialdehyde, wie Glyoxal oder Glutardialdehyd. Die Haftkomponente ist demgemäß in der Regel kovalent gebunden an die Cellulose der Hülle.

Als Trennkomponente, die fest an die Cellulose der Hülle gebunden wird, eignen sich vor allem Chromfettsäure-Komplexe (erhältlich beispielsweise unter der Bezeichnung ®Quilon), reaktive Silikone, Diketene mit langen, fettähnlichen aliphatischen, cycloaliphatischen, araliphatischen und/oder aromatischen Resten (®Aquapel von Hercules Inc.). Das Diketen ist das Dimere eines Ketens der Formel RR'C=C=O, worin die Reste R und R' gleich oder verschieden sind und für ein Wasserstoffatom, (C₄-C₂₀)Alkyl, (C₄-C₂₀)Cycloalkyl, (C₆-C₂₀)Aryl oder (C₇-C₂₀)Aralkyl stehen mit der Maßgabe, daß R und R' nicht gleichzeitig für ein Wasserstoffatom stehen. Bevorzugt sind Dimere von Ketenen, in denen R für (C₈-C₂₀)Alkyl und R' für ein Wasserstoffatom steht. Die gebundene Trennkomponente ist allgemein kovalent oder über einer starke ionische Bindung (im Falle der Chromfettsäure-Komplexe) an die Cellulose gebunden. Sie läßt sich durch Wasser oder andere, bei der Herstellung oder Verarbeitung der Wursthüllen vorkommende Mittel (wie Glycerin) praktisch nicht von der Hülle entfernen.

Die ungebundene Trennkomponente umfaßt allgemein keine reaktiven Gruppen, die unter den beim Aufbringen der Innenimprägnierung oder danach üblichen Bedingungen eine feste Bindung an die Cellulose bewirken könnten. Bevorzugt für die ungebundene Trennkomponente sind Perfluorethylen-Dispersionen (®Hostaflon), Polyethylen-Dispersionen (®Epotal der BASF Aktiengesellschaft), Lecithin und, besonders bevorzugt, Wachsdispersionen. Die Wachsdispersionen können dabei Dispersionen von natürlichen Wachsen, chemisch modifizierten natürlichen Wachsen oder synthetischen Wachsen sein. Die natürlichen Wachse lassen sich dabei einteilen in a) die pflanzlichen Wachse, speziell natürliche Wachse, wie Candelilla-, Camauba-, Japan-, Espartogras-, Ouricoury-Wachs, oder Montanwachs; b) tierische Wachse, wie Schellack, und c) Mineralwachse, wie Ceresin, Erdwachs, Petrolatum, Paraffin- oder Mikro-Wachse. Ein besonders geeignetes Wachs umfaßt ein Estergemisch von (C₂₄-C₃₄)Montansäure mit Alkoholen. Es ist erhältlich unter der Bezeichnung KPS-Wachs von der Clariant Deutschland GmbH. Die ungebundene Trennkomponente ist weder kovalent, noch ionisch, noch auf andere Weise mit der Cellulose verbunden.

Die mit diesen Komponenten auf der Innenseite imprägnierte Cellulosehülle zeigt eine minimale Haftung am Wurstbrät ohne daß sie sich unerwünscht davon ablöst.

Eine geeignete Innenimprägnierung für eine nur für kurze Zeit gereifte und daher stark haftende Salami umfaßt etwa
- 0,8 bis 1,2 Gew.-%: Eiweiß, bevorzugt Casein,
- 4 bis 5 Gew.-%*: Alkyldiketen (eingesetzt wird beispielsweise eine wäßrige Suspension, die etwa 7,6 Gew.-% Alkyldiketen enthält; erhältlich unter der Bezeichnung ®Aquapel)
- 0,1 bis 0,3 Gew.-%: Wachs, bevorzugt KPS Wachs.

Für eine Pizzasalami dieser Art besonders geeignet ist eine Innenimprägnierung, enthaltend etwa
- 1 Gew.-%: Casein (+ 3 Gew.-% Glyoxal, bezogen auf das Gewicht des Caseins),
- 4,5 Gew.-%: Alkyldiketen (verwendet wird beispielsweise eine wäßrige Suspension, die etwa 7,6 Gew.% Alkyldiketen enthält; ®Aquapel) und
- 0,2 Gew.-%: Wachs, bevorzugt KPS-Wachs
umfaßt.

Eine weitere geeignete Innenimprägnierung enthält etwa
- 0,2 bis 0,6 Gew.-%: eines Polyamin-Polyamid-Epichlorhydrin-Harzes (®Luresin KTU der BASF Aktiengesellschaft; eingesetzt wird eine Lösung mit 12,5 Gew.-% Feststoff),
- 0,6 bis 1,0 Gew.-%: eines Chromfettsäure-Komplexes (®Montacell CF; eingesetzt wird eine Lösung mit 40 Gew.-% Feststoff; als Lösemittel wird ein Gemisch aus 48,5 bis 52,5 Gew.-% Isopropanol, 8 bis 10 Gew.% Aceton und 37,5 bis 43,5 Gew.-% Wasser eingesetzt) und
- 0,05 bis 0,2 Gew.-%: KPS-Wachs.

Eine bevorzugte Ausführungsform davon umfaßt
- 0,4 Gew.-%: Luresin KTU,
- 0,8 Gew.-%: Montacell CF und
- 0,1 Gew.-%: KPS-Wachs.

Die beiden vorgenannten allgemeinen Rezepturen sind auch für Dauerwurst geeignet, die unter optimalen, schonenden Bedingungen ohne Verhärtung der Brätoberfläche gereift wurde.

Für eine unter optimalen Bedingungen schimmelgereifte kalifornische Salami hat sich eine etwas modifizierte Innenimprägnierung als besonders günstig erwiesen. Denn bei dieser Salami-Art ist die Hülle nach der Reifung häufig durch den Angriff der Cellulase geschwächt und darf nur noch minimal haften, damit sie sich noch in einem Stück abziehen läßt. Diese modifizierte Innenimprägnierung umfaßt allgemein
- 0,1 bis 0,5: Gew.-% Luresin KTU,
- 4 bis 5: Gew.-% Alkyldiketen und
- 0,1 bis 0,3: Gew.% KPS-Wachs.

Eine konkrete Ausführungsform dieser Innenimprägnierung enthält beispielsweise
- 0,2 Gew.-%: Luresin KTU,
- 4,5 Gew.-%: Alkyldiketen (in Form einer etwa 7,6 gew.-%igen wäßrigen Suspension) und
- 0,2 Gew.-%: KPS-Wachs.

In einer bevorzugten Ausführungsform ist die erfindungsgemäße Wursthülle auf der Außenseite noch mit einer Harzpräparätion versehen, die die Resistenz gegen einen enzymatischen Abbau vergrößert. Die Außenpräparation umfaßt beispielsweise eine Mischung aus einem wasserunlöslichen kationischen Harz (insbesondere einem mit Epichlorhydrin vernetzten Polyamin-Polyamid-Harz) und einem PVC-Pigment (wie in der EP-A 0 287 967 = US 4,967,798 beschrieben). Die Pigmente erhöhen die Rauhigkeit der Außenseite der Hülle, was die Handhabung beim Füllen erleichtert, besonders wenn lange Abschnitte der Hülle gefüllt werden sollen.

Die Herstellung der erfindungsgemäßen Wursthülle erfolgt nach Verfahren, die dem Fachmann prinzipiell bekannt sind. Allgemein wird die Innenimprägnierung in einem In-line-Verfahren aufgebracht. Dazu wird in den Cellulosehydrat-Gelschlauch eine wäßrige Lösung mit den oben beschriebenen Bestandteilen eingefüllt und als Flüssigkeitsblase stationär in einer kontinuierlich sich neu bildenden Schlaufe des in Maschinenrichtung weiterbewegten Cellulose-Gelschlauchs gehalten. Danach wird der Schlauch getrocknet. Dazu wird er aufgeblasen und beispielsweise mit Heißluft beaufschlagt. Vor oder nach dem Aufbringen der Innenimprägnierung kann auf der Außenseite noch eine Imprägnierung aufgebracht werden, die deren Rauhigkeit und/oder deren Cellulaseresistenz erhöht. Das geschieht zweckmäßig mit einem Walzenantragswerk.

Verwendet wird die erfindungsgemäße Wursthülle vor allem für kurz- oder langgereifte Dauerwurst, bevorzugt für kalifornische Salami. Besonders für den großindustriellen Einsatz stellt die erfindungsgemäße Innenimprägnierung einen wesentlichen Fortschritt dar.

Die nachfolgenden Beispiele dienen zur Erläuterung der Erfindung. Prozente sind darin Gewichtsprozente, soweit nicht anders angegeben oder aus dem Zusammenhang unmittelbar ersichtlich.

### Beispiel 1:

Ein außenviskosierter Cellulose-Faserdarm mit einem Durchmesser von 48 mm (Kaliber 48) wurde nach der Weichmacherkufe (diese enthielt eine wäßrige Glycerin-Lösung) auf der Außenseite mit Hilfe eines Walzenantragswerks mit der folgenden Zusammensetzung imprägniert:
- 1000 ml: einer 12,5 %igen wäßrigen Zubereitung eines Polyamin-Polyamid-Epichlorhydrin-Harzes (®Luresin KTU),
- 180 ml: einer 10 %igen NaOH-Lösung,
- 60 ml: Glycerin,
- 60 ml: einer 60 %igen wäßrigen PVC-Latex E-Dispersion,
- 1050 ml: einer 20 %igen wäßrigen Natriumacetat-Lösung und
- 7650 ml: Wasser.

Die Außenpräparation dient zur Verbesserung der Cellulaseresistenz und zur Erleichterung des Füllens langer Abschnitte.

Vor dem Trocknereinlauf wurde der Gelschlauch dann innen imprägniert mit 6 Litern der folgenden Zusammensetzung:

| | | |
|---|---|---|
| 6000 | ml | einer wäßrigen ®Aquapel XS 360-Suspension (enthielt 4,5 % Alkyldiketen), |
| 3488,3 | ml | Wasser, |
| 100 | g | Casein |
| 50 | ml | einer 10%igen wäßrigen NaOH-Lösung, |
| 11,7 | ml | einer 40 %igen wäßrigen Glyoxal-Lösung und |
| 50 | ml | einer 40 %igen wäßrigen KPS-Wachs-Dispersion. |

Dazu wurde eine die wäßrige Zusammensetzung in Form einer Flüssigkeitsblase in einer kontinuierlich sich neu bildenden Schlaufe stationär gehalten, während sich der Faserdarm in Maschinenrichtung weiterbewegte (bekannt als "slug coating").

Der so innen und außen imprägnierte Gelschlauch passierte dann ein Quetschwalzenpaar. Hinter dem Quetschwalzenpaar wurde er aufgeblasen und durch einen Heißlufttrockner geführt. Nach Verlassen des Trockners wurde er auf einen Feuchtegehalt von 8 bis 10 % eingestellt ("konditioniert") und aufgewickelt. Die Rollenware wurde dann zu einseitig abgebundenen Abschnitten von jeweils 3,2 m Länge konfektioniert.

Die Abschnitte wurden mit Salamibrät (Pizzasalami) gefüllt. Nach dem Reifen (12 Tage) ließ sich die Hülle sehr leicht abziehen wobei die Brätoberfläche vollständig intakt blieb (also an keiner Stelle aufgerauht oder gar aufgerissen wurde).

### Beispiel 2:

Ein außenviskosierter Cellulose-Faserdarm vom Kaliber 60 wurde vor dem Trocknereinlauf nach dem im Beispiel 1 genannten Verfahren innen imprägniert mit 8 Litern der folgenden Zusammensetzung:
- 200: ml einer 0,8 %igen wäßrigen Montacell CF-Zubereitung,
- 150: ml einer 12,5 %igen wäßrigen Luresin KTU-Zubereitung,
- 2,5: ml einer 40 %igen wäßrigen KPS-Wachs-Dispersion,
- 0,15: ml Glycerin und
- 8950: ml Wasser.

Der auf der Innenseite imprägnierte Schlauch wurde wie beschrieben in aufgeblasenem Zustand in einem Heißlufttrockner getrocknet, dann befeuchtet bis der Feuchtegehalt bei 16 bis 18 % lag und schließlich abschnittweise zu sogenannten Raupen gerafft. Die auf diese Weise konfektionierte Hülle wurde mit Salamibrät gefüllt. Nach einer mehrwöchigen Reifung unter optimalen Bedingungen zeigte die Hülle eine minimale Bräthaftung, so daß sie sich sehr leicht abziehen ließ, ohne daß dabei die Brätoberfläche beschädigt wurde.

### Beispiel 3:

In eine doppelviskosierten (80 % außen/20 % innen) Cellulose-Faserdarm vom Kaliber 68 wurden 10 Liter der folgenden Zusammensetzung eingefüllt:
- 750: ml einer 7,6 %igen wäßrigen ®Aquapel XS 360-Suspension,
- 150: ml einer 12,5 %igen Luresin KTU-Zubereitung,
- 2,5: ml einer 40 %igen KPS-Wachs-Dispersion,
- 0,15: ml Glycerin und
- 8950: ml Wasser.

Zur Herstellung des Cellulose-Faserdarms war zudem eine Viskose eingesetzt worden, in die eine Lösung aus Na-Alginat und Gafquat eindosiert worden war. Da das Alginat als permanent wirkender ("primärer") Weichmacher fungiert, enthielt der Faserdarm zudem nur 10 % des als sekundärer Weichmacher dienenden Glycerins anstelle der sonst üblichen 22 %. Durch den Zusatz von Alginat und ®Gafquat waren zudem die Reifeeigenschaften wie auch die Cellulaseresistenz verbessert, was für schimmelgereifte Salami von besonderer Bedeutung ist.

Darüber hinaus wurde die Außenseite des Faserdarms wie im Beispiel 1 beschrieben mit Polyamin-Polyamid-Epichlorhydrin-Harz und PVC-Pigmenten imprägniert.

Der Schlauch wurde dann bis auf einen Wassergehalt von 8 bis 10 % befeuchtet und auf eine Rolle aufgewickelt. Die Rollenware wurde wiederum zu einseitig abgebundenen Abschnitten konfektioniert, die dann mit Salamibrät gefüllt und unter den für kalifornische Salami typischen Bedingungen schimmelgereift wurde.

Nach dem Reifen zeigte die Hülle eine nur minimale Haftung. Sie ließ sich daher leicht abschälen (und dabei auch abringeln). Schäden durch Einwirkung von Cellulasen waren nicht erkennbar.

## Patentansprüche

1. **Innenimprägnierte, schlauchförmige Wursthülle auf Basis von Cellulose, dadurch gekennzeichnet, daß die Imprägnierung mindestens eine Haft- und** mindestens zwei Trennkomponenten umfaßt, wobei die Haftkomponente und eine der Trennkomponenten an die Cellulose der Hülle gebunden ist, während eine weitere Trennkomponente ungebunden ist.

2. Wursthülle gemäß Anspruch 1, **dadurch gekennzeichnet, daß** die an die **Cellulose** gebundene Haftkomponente ein natürliches Eiweiß tierischen oder pflanzlichen Ursprungs, bevorzugt Casein, Gelatine, Weizenprotein oder Sojaprotein, Chitosan, ein Aminoplast-Vorkondensat oder ein Polyamin-Polyamid-Epichlorhydrin-Harz ist

3. Wursthülle gemäß Anspruch 1 oder 2, **dadurch gekennzeichnet, daß** die Haftkomponente an die Cellulose der Hülle mit Hilfe mindestens eines Vernetzers gebunden ist.

4. Wursthülle gemäß Anspruch 3, **dadurch gekennzeichnet, daß** der Vernetzer ein Dialdehyd, bevorzugt Glyoxal oder Glutardialdehyd, ist.

5. Wursthülle gemäß einem oder mehreren der Ansprüche 1 bis 4, **dadurch gekennzeichnet, daß** die an die Cellulose gebundene Trennkomponente ein Chromfettsäure-Komplex, ein reaktives Silikon oder ein Diketene mit langen, fettähnlichen aliphatischen, cycloaliphatischen, araliphatischen und/oder aromatischen Resten ist.

6. Wursthülle gemäß einem oder mehreren der Ansprüche 1 bis 5. **dadurch gekennzeichnet, daß** die ungebundene Trennkomponente eine Perfluorethylen-Dispersion, eine Polyethylen-Dispersion, Lecithin und/oder ein Wachs umfaßt.

7. Wursthülle gemäß Anspruch 6, **dadurch gekennzeichnet, daß** das Wachs ein natürliches Wachs ist, bevorzugt ein Montanwachs, besonders bevorzugt ein Estergemisch von (C₂₄-C₃₄)Montansäuren mit Alkoholen.

8. Wursthülle gemäß einem oder mehreren der Ansprüche 1 bis 7, **dadurch gekennzeichnet, daß** sie innen imprägniert ist mit einer Mischung umfassend 0,8 bis 1,2 Gew.-% Eiweiß, bevorzugt Casein, 4 bis 5 Gew.-% Alkyldiketen und 0,1 bis 0,3 Gew.-% Wachs.

9. Wursthülle gemäß einem oder mehreren der Ansprüche 1 bis 8, **dadurch gekennzeichnet, daß** sie innen imprägniert ist mit einer Mischung umfassend 0,2 bis 0,6 Gew.-% eines Polyamin-Polyamid-Epichlorhydrin-Harzes, 0,6 bis 1,0 Gew.% eines Chromfettsäure-Komplexes und 0,05 bis 0,2 Gew.-% eines Wachses.

10. Wursthülle gemäß einem oder mehreren der Ansprüche 1 bis 9, **dadurch gekennzeichnet, daß** sie auf der Außenseite mit einer Harzpräparation versehen ist, die die Resistenz gegen enzymatischen Abbau vergrößert.

11. Wursthülle gemäß Anspruch 10, **dadurch gekennzeichnet, daß** die Außenpräparation eine Mischung aus einem wasserunlöslichen kationischen Harz, bevorzugt einem mit Epichlorhydrin vernetzten Polyamin-Polyamid-Harz, und einem PVC-Pigment umfaßt.

12. Verfahren zur Herstellung einer schlauchförmigen Wursthülle gemäß einem oder mehreren der Ansprüche 1. bis 11, **dadurch gekennzeichnet, daß** die Innnenseite der Wursthülle mit einer wäßrige Zusammensetzung, die mindestens eine Haft- und mindestens zwei Trennkomponenten enthält, wovon die Haftkomponente und eine der Trennkomponenten an die Cellulose der Hülle gebunden ist und die andere nicht, beaufschlagt und die Wursthülle anschließend getrocknet wird.

13. Verwendung der Wursthülle gemäß einem oder mehreren der Ansprüche 1 bis 11 für kurz- oder langgereifte Dauerwurst, bevorzugt für kalifornische Salami.

## Claims

1. An internally impregnated, tubular sausage casing based on cellulose, wherein the impregnation comprises at least one adhesion component and at least two release components, the adhesion component and one of the release components being bound to the cellulose of the casing, whereas a further release component is unbound.

2. The sausage casing as claimed in claim 1, wherein the adhesion component bound to the cellulose is a natural protein of animal or plant origin, preferably casein, gelatin, wheat protein or soya protein, chitosan, an aminoplast precondensate, or a polyamine-polyamide-epichlorohydrin resin.

3. The sausage casing as claimed in claim 1 or 2, wherein the adhesion component is bound to the cellulose of the casing using at least one crosslinker.

4. The sausage casing as claimed in claim 3, wherein the crosslinker is a dialdehyde, preferably glyoxal or glutaraldehyde.

5. The sausage casing as claimed in one or more of claims 1 to 4, wherein the release component bound to the cellulose is a chromium-fatty acid complex, a reactive silicone, or a diketene having long fat-like aliphatic, cycloaliphatic, araliphatic and/or aromatic radicals.

6. The sausage casing as claimed in one or more of claims 1 to 5, wherein the unbound release component comprises a perfluoroethylene dispersion, a polyethylene dispersion, lecithin and/or a wax.

7. The sausage casing as claimed in claim 6, wherein the wax is a natural wax, preferably a montan wax, particularly preferably a mixture of esters of (C₂₄-C₃₄) montanic acids with alcohols.

8. The sausage casing as claimed in one or more of claims 1 to 7, wherein it is internally impregnated with a mixture comprising 0.8 to 1.2 % by weight of protein, preferably casein, 4 to 5 % by weight of alkyldiketene and 0.1 to 0.3 % by weight of wax.

9. The sausage casing as claimed in one or more of claims 1 to 8, wherein it is internally impregnated with a mixture comprising 0.2 to 0.6 % by weight of a polyamine-polyamide-epichlorohydrin resin, 0.6 to 1.0 % by weight of a chromium-fatty acid complex and 0.05 to 0.2 % by weight of a wax.

10. The sausage casing as claimed in one or more of claims 1 to 9, wherein it is provided on the outside with a resin preparation which increases the resistance to enzymatic breakdown.

11. The sausage casing as claimed in claim 10, wherein the external preparation comprises a mixture of a water-insoluble cationic resin, preferably an epichlorohydrin-crosslinked polyamine-polyamide resin, and a PVC pigment.

12. A method for producing a tubular sausage casing as claimed in one or more of claims 1 to 11, which comprises the inside of the sausage casing being exposed to an aqueous composition which comprises at least one adhesion component and at least two release components, of which the adhesion component and one of the release components are bound to the cellulose of the casing, and the other not, and the sausage casing is then dried.

13. The use of the sausage casing as claimed in one or more of claims 1 to 11 for short-time or long-time ripened dry or semi-dry sausage, preferably for California-type salami.

## Revendications

1. Enveloppe pour saucisses en forme de boyau à base de cellulose, imprégnée à l'intérieur, **caractérisée en ce que** l'imprégnation comprend au moins un composant d'adhérence et au moins deux composants de séparation, le composant d'adhérence et l'un des composants de séparation étant liés à la cellulose de l'enveloppe, tandis qu'un autre composant de séparation est non lié.

2. Enveloppe pour saucisses selon la revendication 1, **caractérisée en ce que** le composant d'adhérence lié à la cellulose est une protéine naturelle d'origine animale ou végétale, de préférence la caséine, la gélatine, la protéine de blé ou la protéine de soja, le chitosane, un produit de précondensation d'aminoplaste ou une résine polyamine-polyamide-épichlorhydrine.

3. Enveloppe pour saucisses selon la revendication 1 ou 2, **caractérisée en ce que** le composant d'adhérence est lié à la cellulose de l'enveloppe à l'aide d'au moins un agent de réticulation.

4. Enveloppe pour saucisses selon la revendication 3, **caractérisée en ce que** l'agent de réticulation est un dialdéhyde, de préférence le glyoxal ou le glutaraldéhyde.

5. Enveloppe pour saucisses selon une ou plusieurs des revendications 1 à 4, **caractérisée en ce que** le composant de séparation lié à la cellulose est un complexe chrome-acide gras, un silicone réactif ou un dicétène comportant de longs radicaux aliphatiques, cycloaliphatiques, araliphatiques et/ou aromatiques de type gras.

6. Enveloppe pour saucisses selon une ou plusieurs des revendications 1 à 5, **caractérisée en ce que** le composant de séparation non lié comprend une dispersion de perfluoroéthylène, une dispersion de polyéthylène, de la lécithine et/ou une cire.

7. Enveloppe pour saucisses selon la revendication 6, **caractérisée en ce que** la cire est une cire naturelle, de préférence une cire de lignite, de façon particulièrement préférée un mélange d'esters d'acides montaniques en C₂₄-C₃₄ avec des alcools.

8. Enveloppe pour saucisses selon une ou plusieurs des revendications 1 à 7, **caractérisée en ce qu'**elle est imprégnée à l'intérieur avec un mélange comprenant de 0,8 à 1,2 % en poids de protéine, caséine de préférence, de 4 à 5 % en poids d'alkyldicétène et de 0,1 à 0,3 % en poids de cire.

9. Enveloppe pour saucisses selon une ou plusieurs des revendications 1 à 8, **caractérisée en ce qu'**elle est imprégnée à l'intérieur avec un mélange comprenant de 0,2 à 0,6 % en poids d'une résine polyamine-polyamide-épichlorhydrine, de 0,6 à 1,0 % en poids d'un complexe chrome-acide gras et de 0,05 à 0,2 % en poids d'une cire.

10. Enveloppe pour saucisses selon une ou plusieurs des revendications 1 à 9, **caractérisée en ce qu'**elle est munie sur la face externe d'une préparation de résine qui augmente la résistance à la dégradation enzymatique.

11. Enveloppe pour saucisses selon la revendication 10, **caractérisée en ce que** la préparation externe comprend un mélange d'une résine cationique insoluble dans l'eau, de préférence d'une résine polyamine-polyamide réticulée avec de l'épichlorhydrine, et d'un pigment pour PVC.

12. Procédé pour la fabrication d'une enveloppe pour saucisses en forme de boyau selon une ou plusieurs des revendications 1 à 11, **caractérisé en ce que** la face interne de l'enveloppe pour saucisses est traitée avec une composition aqueuse qui contient au moins un composant d'adhérence et au moins deux composants de séparation, le composant d'adhérence et l'un des composants de séparation étant liés à la cellulose de l'enveloppe et l'autre ne l'étant pas, et l'enveloppe pour saucisses est ensuite séchée.

13. Utilisation de l'enveloppe pour saucisses selon une ou plusieurs des revendications 1 à 11, pour saucisson à affinage court ou long, de préférence pour salami californien.
